# EUROPEAN PATENT SPECIFICATION

(11) **EP 3 085 945 B1**
(45) Date of publication and mention of the grant of the patent: **27.03.2019**
(21) Application number: 15305617.1
(22) Date of filing: 23.04.2015
(51) Int. Cl.: F02M 59/44, F02M 59/10, F01L 1/14, F01L 1/16

(54) **CAM FOLLOWER, INJECTION PUMP AND VALVE ACTUATOR COMPRISING SUCH A CAM FOLLOWER, AND MANUFACTURING METHOD**
NOCKENFOLGER, EINSPRITZPUMPE UND VENTILAKTUATOR MIT SOLCH EINEM NOCKENFOLGER UND HERSTELLUNGSVERFAHREN
GALET DE CAME, POMPE À INJECTION ET ACTIONNEUR DE SOUPAPE COMPRENANT UN TEL SUIVEUR DE CAME ET PROCÉDÉ DE FABRICATION

(43) Date of publication of application: 26.10.2016
(73) Proprietor: Aktiebolaget SKF, 415 50 Göteborg (SE)
(72) Inventor: Viault, Samuel, 37360 Saint-Antoine-du-Rocher (FR); Champalou, François, 41150 Chaumont-sur-Loire (FR); Hauvespre, Benoit, 37230 Saint Etienne de Chigny (FR); Berruet, Nicolas, 37260 Artannes sur Indre (FR); Jouanno, Guillaume, 37540 Saint-Cyr-sur-Loire (FR)
(74) Representative: Kloker, Markus

(56) References cited:
- EP-A1- 2 853 696
- DE-A1- 10 251 198
- DE-A1-102009 058 369
- US-A- 5 239 951
- US-A1- 2014 165 825

## Description

### TECHNICAL FIELD OF THE INVENTION

The invention concerns a cam follower. The invention also concerns an injection pump and a valve actuator for a motor vehicle, each comprising such a cam follower. The invention also concerns a method for manufacturing such a cam follower.

### BACKGROUND OF THE INVENTION

EP-A-2 607 636 discloses a cam follower comprising a tappet, a pin and a roller. The tappet extends along a longitudinal axis, while the pin and the roller are centered on a transverse axis. The tappet is formed with two lateral flanges, delimiting an intermediate gap between them and each comprising a cylindrical bore. The roller is positioned in the intermediate gap between both flanges and bores. The pin is fitted in the two bores, such that the roller is movable in rotation relative to the pin around its axis. The pin is caulked, in other words plastically deformed, on both opposite ends to create a mechanical connection by press-fit in the tappet bores.

When the cam follower is in service, the roller collaborates with a cam synchronized with the internal combustion engine camshaft. The rotation of the camshaft leads to a periodic displacement of a piston of the pump that rests against the tappet, to allow fuel to be delivered. The tappet is movable back and forth along the longitudinal axis in a housing, while the roller is movable in rotation around its central axis against the cam.

Classically, the tappet can be made of a polymer material. However, under high temperatures and humidity of cam follower applications, polymer materials induce problems of dimensional stability and moisture absorption. The tappet dimensions and tolerances in the housing can change, which create a risk of failure of the cam follower, and consequently a risk of failure of the engine.

US 5 239 951 discloses a valve lifter in contact with a cam shaft and comprising a body slidably disposed in a guide. The body is made from a metal material coated with a solid film lubricant comprising graphite and MoS2 in order to reduce the coefficient of friction between the body and the guide. The metal is an alloy of at least two different elements. This document also disclosed a roller cam follower mounted rotatably in a U-shaped cradle formed at one end of the valve lifter body. Shaft portions are made in one piece with the roller cam follower.

DE 102 51 198 A1 discloses a sliding cylindrical element for use in a rotating energy conversion machine and provided with a body made of a composite material such as epoxy resin and integrating a dry lubricant. The synthetic material comprises reinforcement fibers, and the dry lubricant may be polytetrafluorethylene (PTFE) and/or graphite.

### SUMMARY OF THE INVENTION

The aim of the invention is to provide an improved cam follower.

To this end, the invention concerns a cam follower comprising a tappet having a cylindrical outer surface centered on a longitudinal axis and adapted to slide in a housing surrounding the tappet, a pin extending between two opposite ends along a transverse axis perpendicular to the longitudinal axis and a roller element movable in rotation relative to the pin around the transverse axis and adapted to roll on a cam. According to the invention, the tappet is made of a composite material integrating at least one dry lubricant released at the cylindrical outer surface when the cam follower is in operation. Furthermore, the tappet comprises reinforcement fibers, by example glass fibers, carbon fibers or para-aramid synthetic fibers, and the reinforcement fibers and the at least one dry lubricant constitute between 28 and 32% in weight of the tappet.

Thanks to the invention, wear of the tappet moving back and forth in its housing can be reduced. Consequently, lifetime of the cam follower can be improved. Dry lubricant contained in the tappet provides a satisfactory lubrication of its tappet outer diameter in addition to the engine oil.

According to further aspects of the invention which are advantageous but not compulsory, such a cam follower may incorporate one or several of the following features:
- The tappet comprises a synthetic matrix, for example made of polyamide (PA), polyphtalamide (PPA), polyether-ether-ketone (PEEK) or polyaryletherketone (PAEK).
- The at least one dry lubricant integrated to the tappet is chosen among graphite, polytetrafluoroethylene (PTFE) and molybdenum disulfide (MoS2).
- The tappet is made of a composite material integrating two dry lubricants, by example graphite and polytetrafluoroethylene.
- The cam follower is provided with at least one antirotation device for preventing rotation of the tappet in the housing around the longitudinal axis.
- The cam follower further comprises a support element mounted in the tappet and supporting the pin.
- The support element is fitted in recesses formed in the tappet.
- Each pin end is mounted between a half-cylindrical section formed in the tappet and a half-cylindrical section formed in the support element.
- The support element is a metal insert, for example made of steel.
- The cam follower comprises a bearing interposed between the pin and the roller element.

The invention also concerns an injection pump for a motor vehicle, comprising a cam follower as defined here-above.

The invention also concerns a valve actuator for a motor vehicle, comprising a cam follower as defined here-above.

The invention also concerns a method for manufacturing a cam follower as described here-above, whereas the method comprises a step of forming the tappet of a composite material integrating at least one dry lubricant adapted to be released at the cylindrical outer surface when the cam follower is in operation.

### BRIEF DESCRIPTION OF THE DRAWINGS

The invention will now be explained in correspondence with the annexed figures, and as an illustrative example, without restricting the object of the invention. In the annexed figures:
- figure 1 is a first sectional view of a cam follower according to the invention, in a first plane including the longitudinal axis of the cam follower, showing a tappet, an insert, a pin and a roller forming the cam follower;
- figure 2 is a second sectional view of the cam follower, in a second plane perpendicular to the first plane and including the longitudinal axis of the cam follower, showing only the tappet and the insert;
- figure 3 is an axial view of the cam follower along arrow III of figure 2, showing only the tappet and the insert; and
- figure 4 is a perspective view of the tappet.

### DETAILED DESCRIPTION OF SOME EMBODIMENTS

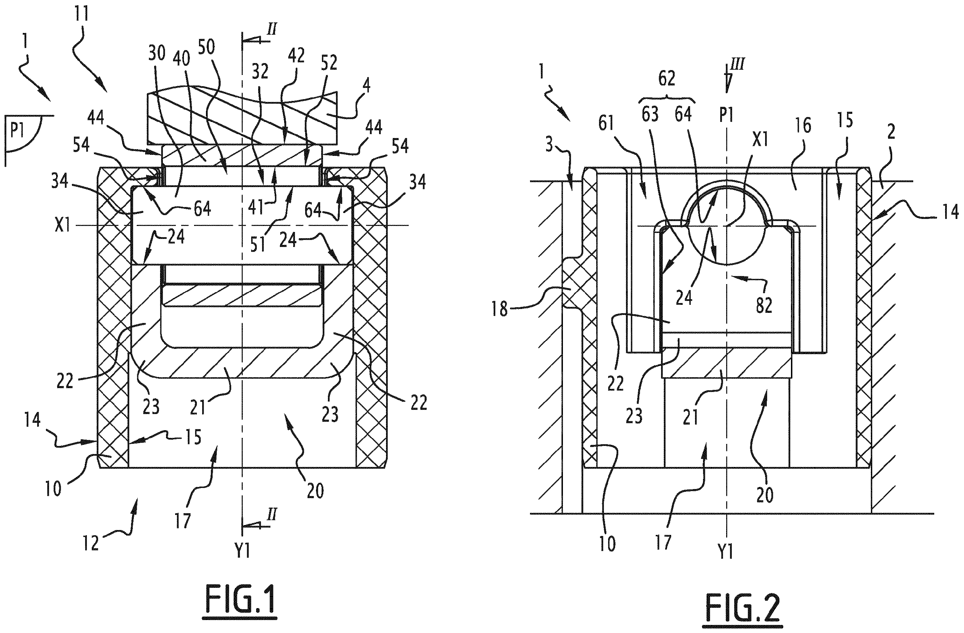

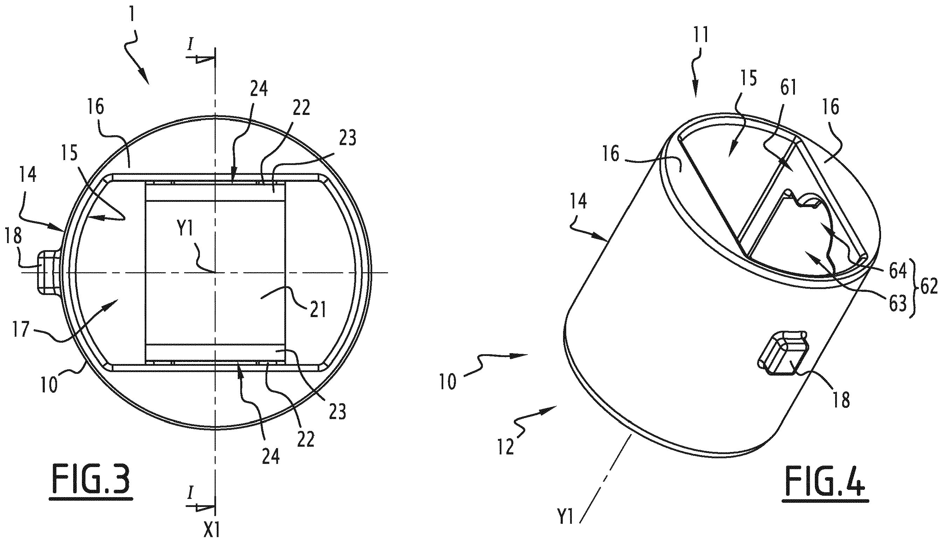

The cam follower 1 represented on figures 1 to 4 is adapted to equip a mechanical system, for example an injection pump or a valve actuator for a motor vehicle.

The cam follower 1 comprises a tappet 10, an insert 20, a pin 30, a roller 40 and a bush 50, together forming a plain bearing. Pin 30, roller 40 and bush 50 are centered on a transverse axis X1, while tappet 10 is centered on a longitudinal axis Y1. Axes X1 and Y1 are perpendicular. The tappet 10 is mounted in a housing 2, represented only on figure 2 for simplification purpose, belonging to the mechanical system. Housing 2 is provided with a groove 3 extending parallel to axis Y1. Housing 2 is preferably made of metal. Tappet 10 is movable back and forth along axis Y1 in housing 2. Roller 40 is adapted to roll on a cam 4, shown only partly on figure 1 for simplification purpose.

Tappet 10 has an overall tubular shape centered on axis Y1. Tappet 10 extends along axis Y1 between two ends 11 and 12. Tappet 10 has a cylindrical outer surface 14 and a cylindrical inner bore 15. Tappet 10 also has two inner protruding parts 16, formed on either side of axis X1. Bore 15 and parts 16 delimit a cavity 17 open at both ends 11 and 12. Cavity 17 receives a shaft not shown through end 12, for moving tappet 10 along axis Y1. Surface 14 is adapted to slide in housing 2 surrounding tappet 10.

Each inner protruding part 16 has a plane surface 61 extending perpendicular to axis X1. A recess 62 is formed in part 16 and open at surface 61. Recess 62 includes a parallelepiped section 63 and a half-cylindrical section 64 in communication with each other. Sections 63 and 64 are open toward end 12 of tappet 10. Sections 64 are centered on axis X1.

Tappet 10 is further provided with an outer pin 18 protruding from surface 14 and positioned in groove 3 of housing 2. This, pin 18 forms an anti-rotation device preventing tappet 10 from rotating in housing 2 around axis Y1.

Insert 20 comprises a plane central portion 21 and two plane lateral portions 22. Insert 20 comprises curved portions 23 connecting portions 21 and 22. Portions 22 form two lateral flanges extending parallel to axis Y1 in a bifurcated manner, from portion 21 toward end 11, on both side of axis Y1. Insert 20 comprises a half-cylindrical section 24 formed in each portion 22. Portions 22 are fitted in respective recesses 62, with sections 24 centered on axis X1 and open toward sections 64. Insert 20 is preferably made of stamped metal sheet, for example made of steel. Insert 20 is assembled with tappet 10 by insertion from end 12 and force-fitting in recesses 62.

Thanks to insert 20, the shape of tappet 10 can be simplified in comparison with a tappet supporting a pin 30, without support element. Moreover, tappet 10 and insert 20 can each be made of specific materials, chosen for specific conditions of operation. Thus, lifetime of cam follower 1 can be improved.

Pin 30 has a cylindrical outer surface 32 extending between two pin ends 34. Roller 40 has an inner cylindrical bore 41 and an outer cylindrical surface 42 extending between two lateral faces 44. Bush 50 has an inner cylindrical bore 51 and an outer cylindrical surface 52 extending between two lateral faces 54. Surface 32 of pin 30 is adjusted with bore 51 of bush 50, while surface 52 of bush 50 is adjusted with bore 41 of roller 40.

During assembly of cam follower 1, each end 34 of pin 30 is received in a bore centered on axis X1 and formed by sections 24 and 64. Pin, roller and bush axes merge with axis X1. Roller 40 is then adapted to roll on cam 4, more precisely surface 42 can roll on the outer surface of cam 4, while can follower 1 moves back and forth along axis Y1. When roller 40 rolls on cam 4, each section 26 bears a respective end 36 of pin 30, on which roller 40 is mounted. In other words, insert 20 forms a support element for pin 30 and roller 40.

According to the invention, tappet 10 is made of a composite material integrating at least one dry lubricant released at the cylindrical outer surface 14 when cam follower 1 is in operation. Thus, wear of tappet 10 moving back and forth in housing 2 can be reduced. Consequently, lifetime of cam follower 1 can be improved. The composite material of tappet 10 can be chosen as a compromise between weight, cost, resistance (to oil flow and temperature variations) and lubrication properties.

Preferably, tappet 10 comprises a synthetic matrix, by example made of polyamide (PA), polyphtalamide (PPA), polyether-ether-ketone (PEEK) or polyaryletherketone (PAEK). Thus, weight and inertia of cam follower 1 are reduced. According to an alternate embodiment, tappet 10 can include several synthetic materials.

Tappet 10 further comprises reinforcement fibers, by example glass fibers, carbon fibers or para-aramid synthetic fibers (known under trademark "Kevlar"). Reinforcement fibers allow conserving dimensional stability of tappet 10 under high temperatures and humidity (due to oil lubrication, but also shipping conditions).

Still preferably, the at least one dry lubricant integrated to tappet 10 is chosen among graphite (C and possibly other components), polytetrafluoroethylene (PTFE) and molybdenum disulfide (MoS2).

Reinforcement fibers and dry lubricant(s) constitute between 28% and 32% in weight of tappet 10, in particular 30% in weight.

According to a particular embodiment, tappet 10 integrates two dry lubricants, by example graphite and PTFE.

Other non-shown embodiments can be implemented without leaving the scope of the invention.

According to a non-show embodiment, tappet 10 may comprise one or several antirotation devices 18 having various shapes and/or positions. Device 18 may be formed integral with tappet 10, for example by molding, punching or machining. Alternately, device 18 may be mounted on tappet body 10, for example by clipping. Besides, tappet 10 may be provided with two or more antirotation devices 18.

According to another non-show embodiment, bush 50 may be replaced by a rolling bearing including a series of needles or rollers distributed around axis X1 between pin 30 and roller 40.

According to another non-shown embodiment, cam follower 1 may be devoid of bearing or bush 50, so that pin 30 and roller 40 form together a plain bearing. In this case, surface 32 of pin 30 is adjusted with bore 41 of roller 40.

Whatever the embodiment, tappet 10 is made of a composite material integrating at least one dry lubricant released at the cylindrical outer surface 14 when cam follower 1 is in operation.

In addition, technical features of the different embodiments can be, in whole or part, combined with each other. Thus, the cam follower 1 and its manufacturing method can be adapted to the specific requirements of the application.

## Claims

1. A cam follower (1), comprising:
- a tappet (10) having a cylindrical outer surface (14) centered on a longitudinal axis (Y1) and adapted to slide in a housing (2) surrounding the tappet (10),
- a pin (30) extending between two opposite ends (34) along a transverse axis (X1) perpendicular to the longitudinal axis (Y1), and
- a roller element (40) movable in rotation relative to the pin (30) around the transverse axis (X1) and adapted to roll on a cam (4),
the tappet (10) being made of a composite material integrating at least one dry lubricant released at the cylindrical outer surface (14) when the cam follower (1) is in operation, the tappet (10) comprising reinforcement fibers, by example glass fibers, carbon fibers or para-aramid synthetic fibers wherein the reinforcement fibers and the at least one dry lubricant constitute between 28 and 32% in weight of the tappet (10).

2. The cam follower (1) according to claim 1, wherein the tappet (10) comprises a synthetic matrix, for example made of polyamide (PA), polyphtalamide (PPA), polyether-ether-ketone (PEEK) or polyaryletherketone (PAEK).

3. The cam follower (1) according to any one of the previous claims, wherein the at least one dry lubricant integrated to the tappet (10) is chosen among graphite, polytetrafluoroethylene (PTFE) and molybdenum disulfide (MoS2).

4. The cam follower (1) according to any one of the previous claims, wherein the tappet (10) is made of a composite material integrating two dry lubricants, by example graphite and polytetrafluoroethylene.

5. The cam follower (1) according to any one of the previous claims, wherein it is provided with at least one antirotation device (80) for preventing rotation of the tappet (10) in the housing (2) around the longitudinal axis (Y1).

6. The cam follower (1) according to any one of the previous claims, wherein the cam follower (1) further comprises a support element (20) mounted in the tappet (10) and supporting the pin (30).

7. The cam follower (1) according to claim 6, wherein the support element (20) is fitted in recesses (63, 64) formed in the tappet (10).

8. The cam follower (1) according to any one of the previous claims 6 or 7, wherein each pin end (34) is mounted between a half-cylindrical section (64) formed in the tappet (10) and a half-cylindrical section (24) formed in the support element (20).

9. The cam follower (1) according to any one of the previous claims 6 to 8, wherein the support element (20) is a metal insert, for example made of steel.

10. The cam follower (1) according to any one of the previous claims, comprising a bearing (50) interposed between the pin (30) and the roller element (40).

11. An injection pump for a motor vehicle, wherein it comprises a cam follower (1) according to any one of claims 1 to 10.

12. A valve actuator for a motor vehicle, wherein it comprises a cam follower (1) according to any one of claims 1 to 10.

13. Method for manufacturing a cam follower (1) according to any one of claims 1 to 10, wherein the method comprises a step of forming the tappet (10) of a composite material integrating at least one dry lubricant adapted to be released at the cylindrical outer surface (14) when the cam follower (1) is in operation.

## Patentansprüche

1. Ventilstößel (1), umfassend:
- einen Stößel (10) mit einer zylindrischen Außenfläche (14), der auf einer Längsachse (Y1) zentriert und ausgelegt ist, in ein den Stößel (10) umgebendes Gehäuse (2) zu gleiten,
- einen Stift (30), der sich zwischen zwei gegenüberliegenden Enden (34) entlang einer Querachse (X1) senkrecht zu der Längsachse (Y1) erstreckt, und
- ein Rollenelement (40), das drehbar in Relation zu dem Stift (30) um die Querachse (X1) bewegbar und ausgelegt ist, auf einem Nocken (4) zu rollen,
wobei der Stößel (10) aus einem Verbundwerkstoff hergestellt ist, in den mindestens ein trockener Schmierstoff integriert ist, der an der zylindrischen Außenfläche (14) freigesetzt wird, wenn der Ventilstößel (1) im Einsatz ist, wobei der Stößel (10) Verstärkungsfasern, zum Beispiel Glasfasern, Karbonfasern oder synthetische para-Aramid-Fasern umfasst, wobei die Verstärkungsfasern und der mindestens eine trockene Schmierstoff zwischen 28 und 32 % des Gewichts des Stößels (10) ausmachen.

2. Ventilstößel (1) nach Anspruch 1, wobei der Stößel (10) ein synthetisches Grundgefüge umfasst, zum Beispiel hergestellt aus Polyamid (PA), Polyphthalamid (PPA), Polyetheretherketon (PEEK) oder Polyaryletherketon (PAEK).

3. Ventilstößel (1) nach einem der vorhergehenden Ansprüche, wobei der mindestens eine trockene Schmierstoff, der in den Stößel (10) integriert ist, aus Graphit, Polytetrafluorethylen (PTFE) und Molybdändisulfid (MoS2) ausgewählt ist.

4. Ventilstößel (1) nach einem der vorhergehenden Ansprüche, wobei der Stößel (10) aus einem Verbundwerkstoff hergestellt ist, in den zwei trockene Schmierstoffe integriert sind, zum Beispiel Graphit und Polytetrafluorethylen.

5. Ventilstößel (1) nach einem der vorhergehenden Ansprüche, wobei er mit mindestens einer Drehschutzvorrichtung (80) zum Verhindern einer Drehung des Stößels (10) in dem Gehäuse (2) um die Längsachse (Y1) bereitgestellt ist.

6. Ventilstößel (1) nach einem der vorhergehenden Ansprüche, wobei der Ventilstößel (1) ferner ein Stützelement (20) umfasst, das in dem Stößel (10) angebracht ist und den Stift (30) stützt.

7. Ventilstößel (1) nach Anspruch 6, wobei das Stützelement (20) in in dem Stößel (10) ausgebildeten Vertiefungen (63, 64) eingesetzt ist.

8. Ventilstößel (1) nach einem der vorhergehenden Ansprüche 6 oder 7, wobei jedes Stiftende (34) zwischen einem in dem Stößel (10) ausgebildeten halbzylindrischen Abschnitt (64) und einem in dem Stützelement (20) ausgebildeten halbzylindrischen Abschnitt (24) angebracht ist.

9. Ventilstößel (1) nach einem der vorhergehenden Ansprüche 6 bis 8, wobei das Stützelement (20) ein Metalleinsatz ist, der zum Beispiel aus Stahl hergestellt ist.

10. Ventilstößel (1) nach einem der vorhergehenden Ansprüche, umfassend ein Lager (50), das zwischen dem Stift (30) und dem Rollenelement (40) angeordnet ist.

11. Einspritzpumpe für ein Kraftfahrzeug, wobei sie einen Ventilstößel (1) nach einem der Ansprüche 1 bis 10 umfasst.

12. Ventilantrieb für ein Kraftfahrzeug, wobei er einen Ventilstößel (1) nach einem der Ansprüche 1 bis 10 umfasst.

13. Verfahren zum Herstellen eines Ventilstößels (1) nach einem der Ansprüche 1 bis 10, wobei das Verfahren einen Schritt eines Formens des Stößels (10) aus einem Verbundwerkstoff umfasst, in den mindestens ein trockener Schmierstoff integriert, der ausgelegt ist, an der zylindrischen Außenfläche (14) freigesetzt zu werden, wenn der Ventilstößel (1) im Einsatz ist.

## Revendications

1. Galet de came (1), comprenant:
- un poussoir (10) ayant une surface extérieure cylindrique (14) centrée sur un axe longitudinal (Y1) et adapté pour coulisser dans un logement (2) entourant le poussoir (10),
- une broche (30) s'étendant entre deux extrémités opposées (34) le long d'un axe transversal (X1) perpendiculaire à l'axe longitudinal (Y1), et
- un élément à galet (40) mobile en rotation par rapport à la broche (30) autour de l'axe transversal (X1) et adapté pour rouler sur une came (4),
le poussoir (10) étant réalisé en un matériau composite intégrant au moins un lubrifiant sec distribué sur la surface extérieure cylindrique (14) lorsque le galet de came (1) est en fonctionnement, le poussoir (10) comprenant des fibres de renforcement, par exemple des fibres de verre, des fibres de carbone ou des fibres synthétiques para-aramide, les fibres de renforcement et l'au moins un lubrifiant sec constituant entre 28 et 32% en poids du poussoir (10).

2. Galet de came (1) selon la revendication 1, **caractérisé en ce que** le poussoir (10) présente une matrice synthétique, par exemple en polyamide (PA), polyphtalamide (PPA), polyéther-éther-cétone (PEEK) ou polyaryléthercétone (PAEK).

3. Galet de came (1) selon l'une quelconque des revendications précédentes, dans lequel l'au moins un lubrifiant sec intégré au poussoir (10) est choisi parmi le graphite, le polytétrafluoroéthylène (PTFE) et le sulfure de molybdène (MoS2).

4. Galet de came (1) selon l'une quelconque des revendications précédentes, dans lequel le poussoir (10) est réalisé en un matériau composite intégrant deux lubrifiants secs, par exemple le graphite et le polytétrafluoroéthylène.

5. Galet de came (1) selon l'une quelconque des revendications précédentes, **caractérisé en ce qu'**il est pourvu d'au moins un dispositif anti-rotation (80) pour empêcher la rotation du poussoir (10) dans le logement (2) autour de l'axe longitudinal (Y1).

6. Galet de came (1) selon l'une quelconque des revendications précédentes, le galet de came (1) comprenant en outre un élément de support (20) monté dans le poussoir (10) et supportant la broche (30).

7. Galet de came (1) selon la revendication 6, dans lequel l'élément de support (20) est monté dans des évidements (63, 64) formés dans le poussoir (10).

8. Galet de came (1) selon l'une quelconque des revendications précédentes 6 ou 7, dans lequel chaque extrémité de broche (34) est montée entre une section demi-cylindrique (64) formée dans le poussoir (10) et une section demi-cylindrique (24) formée dans l'élément de support (20).

9. Galet de came (1) selon l'une quelconque des revendications précédentes 6 à 8, dans lequel l'élément de support (20) est un insert métallique, par exemple en acier.

10. Galet de came (1) selon l'une quelconque des revendications précédentes, comprenant un palier (50) interposé entre la broche (30) et l'élément à galet (40).

11. Pompe à injection pour un véhicule automobile, **caractérisée en ce qu'**elle comprend un galet de came (1) selon l'une quelconque des revendications 1 à 10.

12. Actionneur de soupape pour un véhicule automobile, **caractérisé en ce qu'**il comprend un galet de came (1) selon l'une quelconque des revendications 1 à 10.

13. Procédé de fabrication d'un galet de came (1) selon l'une quelconque des revendications 1 à 10, dans lequel le procédé comprend une étape de formation du poussoir (10) d'un matériau composite intégrant au moins un lubrifiant sec adapté pour être distribué sur la surface extérieure cylindrique (14) lorsque le galet de came (1) est en fonctionnement.
